Europäisches Patentamt

**European Patent Office**

Office européen des brevets

(11) Numéro de publication: **0 223 659**
**B1**

(12) **FASCICULE DE BREVET EUROPEEN**

(45) Date de publication du fascicule du brevet:
**26.04.89**

(21) Numéro de dépôt: **86402288.4**

(22) Date de dépôt: **14.10.86**

(51) Int. Cl.⁴: **B60R 5/04**

(54) Tablette arrière pour véhicule automobile et véhicule équipé de cette tablette.

(30) Priorité: **23.10.85 FR 8515749**

(43) Date de publication de la demande:
**27.05.87 Bulletin 87/22**

(45) Mention de la délivrance du brevet:
**26.04.89 Bulletin 89/17**

(84) Etats contractants désignés:
**DE GB IT SE**

(56) Documents cités:
**DE-A- 3 512 974**
**FR-A- 1 262 600**

(73) Titulaire: **AUTOMOBILES PEUGEOT, 75, avenue de la Grande Armée, F-75116 Paris(FR)**
Titulaire: **AUTOMOBILES CITROEN, 62 Boulevard Victor-Hugo, F-92200 Neuilly-sur-Seine(FR)**

(72) Inventeur: **Moreau, Michel Louis, 110 rue Gabriel Péri, F-28000 Chartres(FR)**
Inventeur: **Lefort, Michel, 151 Boulevard de Charonne, F-75011 Paris(FR)**

(74) Mandataire: **Durand, Yves Armand Louis et al, Cabinet Z. Weinstein 20, Avenue de Friedland, F-75008 Paris(FR)**

**Description**

La présente invention a essentiellement pour objet une tablette arrière pour véhicule automobile.

Elle vise également un véhicule quelconque équipé d'une telle tablette.

Les véhicules actuels de tourisme et/ou de commerce sont généralement munis d'une tablette arrière qui est disposée dans un plan horizontal entre le dossier du siège arrière et la porte du coffre du véhicule, au niveau de la partie supérieure du dossier du siège.

Cette tablette arrière peut être amovible ou non et est principalement destinée à recouvrir l'espace intérieur du coffre arrière, étant entendu qu'elle peut également servir à supporter des colis quelconques, par exemple ceux qui ne trouvent pas leur place dans la boîte à gants du véhicule.

On a déjà proposé des tablettes arrière pour véhicule comportant un dénivellement entre la partie centrale et la bordure de la tablette de façon à retenir les objets sur celle-ci dans les virages ou pendant les accélérations du véhicule. Ce dénivellement est généralement peu profond afin de conserver un volume maximal pour le coffre arrière, de sorte que les colis portés par la tablette gênent la visibilité arrière et peuvent être rejetés quand la tablette est relevée.

C'est dire que, jusqu'à présent, il n'a pas été proposé une tablette arrière de véhicule qui est dotée de moyens tels que les colis qu'elle supporte n'altèrent pas ou peu la visibilité arrière, et demeurent parfaitement maintenus sur la tablette lorsqu'on la relève par exemple avec la porte du coffre, et qui permet en outre un agrandissement du volume du coffre si nécessaire.

La présente invention a pour but de combler cette lacune en proposant une tablette arrière, en particulier pour véhicules automobiles, et du type disposée horizontalement entre le siège arrière et la porte du coffre du véhicule, caractérisée en ce qu'elle présente la forme d'une cuvette et qu'elle comporte des moyens permettant son montage réversible de telle façon que l'ouverture de la cuvette soit tournée soit vers le haut, soit vers le bas.

Suivant une autre caractéristique de l'invention, cette tablette est munie de moyens de pivotement constitués par deux axes alignés fixés au voisinage du bord avant de la tablette et faisant saillie extérieurement pour coopérer par clippage avec des paliers ou analogues portés par des supports solidaires des flancs arrière de la caisse du véhicule.

Cette tablette est encore caractérisée par des moyens d'appui coopérant avec les supports précités et constitués par un bord tombé parcourant la périphérie de la tablette et, lorsque celle-ci est en position inversée, par une partie plane reliant le bord tombé au bord de la cuvette.

Cette tablette peut, comme cela est connu en soi, comporter des moyens de relevage constitués par au moins un cordon souple dont les deux extrémités sont respectivement reliées à la tablette et à la porte du coffre, étant entendu que, suivant une autre caractéristique de l'invention, ladite tablette comporte des moyens de clippage réversibles pour l'une des extrémités du cordon.

Ces moyens peuvent être constitués par des orifices traversants prévus dans la tablette et dans lesquels on clippe l'une des extrémité du cordon.

L'invention vise également un véhicule équipé d'une tablette amovible et réversible répondant à l'une ou l'autre des caractéristiques susmentionnées, cette tablette pouvant être non relevable ou relevable à l'aide de la porte du coffre du véhicule.

L'invention est présentée dans la description détaillée qui suit et se réfère aux dessins annexés, donnés uniquement à titre d'exemple, et dans lesquels:

– la figure 1 est une vue en coupe d'une tablette selon l'invention et montée entre le siège arrière et la porte du coffre d'un véhicule, cette coupe étant effectuée sensiblement suivant la ligne I–I de la figure 2, et

– la figure 2 est une vue partielle et de dessus de la tablette suivant la flèche II de la figure 1.

Suivant un exemple de réalisaiton, et en se reportant aux dessins annexés, on voit qu'une tablette 1 selon l'invention peut être montée d'une manière réversible entre la partie arrière et supérieure du dossier 2 du siège arrière du véhicule et la porte 3 du coffre de ce véhicule, ladite tablette 1 comportant, de préférence dans sa partie centrale, une cuvette 4 destinée à contenir des colis trop grands pour la boîte à gants et trop petits pour le coffre arrière 5.

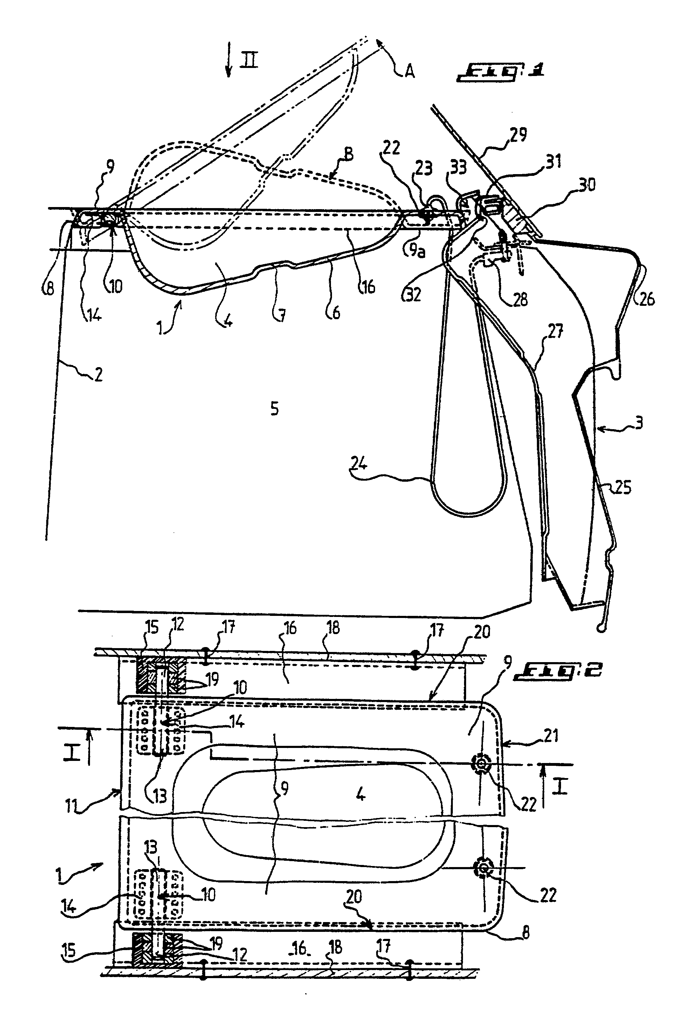

La tablette 1 est réalisée par exemple en un matériau synthétique rigide éventuellement revêtu d'une garniture en tissu ou analogue et, comme on le voit bien sur la figure 1, la cuvette 4 ménagée dans la tablette comprend un fond 6 incliné et remontant depuis l'avant vers l'arrière, lequel fond est muni d'une nervure 7 de raidissement. La tablette 1 est parcourue sur toute sa périphérie par un bord tombé 8, tandis qu'une partie ou plage plane et horizontale 9 relie le bord tombé 8 au bord de la cuvette 4.

Comme on le voit sur la figure 2, la tablette 1 comporte deux axes alignés 10 qui sont respectivement fixés sur les côtés de la tablette au voisinage du bord avant 11 de celle-ci. Plus précisément, chacun des axes 10 se compose d'une partie cylindrique 12 faisant latéralement saillie de la tablette, et d'une partie à section rectangualire 13 retenue par un étrier 14 enveloppant celle-ci et fixé, par exemple par soudage, sur le dessous de la plage 9, comme on le voit bien sur la figure 1.

Revenant à la figure 2, on voit que la partie cylindrique 12 des axes 10 coopère par clippage avec un palier 15 formé dans un support 16 réalisé par exemple en matière synthétique moulée et fixé au moyen de rivets 17 par exemple sur le flanc arrière 18 de la caisse du véhicule.

Les paliers 15, montrés en coupe axiale sur la figure 2, sont avantageusement munis de lames élastiques arquées 19 permettant le clippage et la retenue des extrémités cylindriques 12 des axes 10.

Les supports 16, comme on le verra plus loin, constituent une surface d'appui pour les côtés 20 de la tablette 1.

Sur la plage horizontale 9, au voisinage du bord arrière 21 de la tablette 1, sont prévus deux trous 22 permettant la fixation par clippage des extrémités 23 de cordons 24 qui relient la tablette 1 à la porte 3 du coffre qui comporte un volet extérieur 25 avec becquet 26, et une garniture intérieure 27 en matière plastique rigide. On a montré en 28 la liaison des cordons 24 au volet 25 de la porte 3 du coffre.

Les extrémités 23 des cordons 24 sont aménagées de toute manière appropriée pour permettre un clippage au travers des orifices 22 d'un côté ou de l'autre de la plage 9, puisque, comme on l'a vu précédemment, la tablette 1 peut être montée de manière réversible, comme cela sera d'ailleurs expliqué plus en détail ultérieurement.

On voit en 29 sur la figure 1, la vitre arrière du véhicule qui est collée sur un bossage 30 solidaire de la partie en forme de becquet 26. Le bossage 30 supporte un profilé de finition 31 muni d'une lèvre 32. Cette lèvre 32 laisse un passage étroit 33 entre elle et le bord tombé 8 de la tablette 1, de manière à permettre une circulation d'air entre l'habitacle du véhicule et le coffre 5.

On expliquera brièvement le montage et les avantages procurés par la tablette réversible qui vient d'être décrite.

Dans la position illustrée en traits pleins sur la figure 1, la tablette 1 se trouve en position normale d'utilisation, la concavité de la cuvette 4 étant dirigée vers le haut et pouvant recevoir des colis sans gêner la visibilité arrière du conducteur au travers de la vitre 29. Dans cette position, la tablette 1 prend appui par ses côtés 20 et par le bord tombé 8 sur les supports latéraux 16, comme on le voit bien sur les figures 1 et 2, lesquels supports peuvent comporter à cet effet un épaulement approprié.

Lorsqu'on relève la porte du coffre 3, les cordons 24 provoquent le relèvement de la tablette 1 qui pivote autour des axes 10, comme cela est illustré en traits pointillés A sur la figure 1. Il est à noter ici que les colis contenus dans la cuvette 4 demeureront maintenus dans cette cuvette en raison de sa profondeur relativement importante.

Si l'utilisateur du véhicule désire transporter des gros colis, il pourra retourner la tablette 1 qui prendra la position inversée représentée en traits pointillés B sur la figure 1. Le passage à cette position inversée sera très simple à effectuer puisqu'il suffira de déclipper les axes 10 des paliers 15 et les cordons 24 de la tablette 1 pour ensuite reclipper les axes 10 et les extrémités 23 des cordons 24 sur l'autre face de la tablette disposée en position inversée entre le dossier 2 du siège arrière et la porte 3 du coffre. Il est à noter qu'en position retournée, la tablette 1 prend appui sur les supports latéraux 16 par la plage horizontale 9 reliant le bord tombé 8 au bord de la cuvette 4, comme cela est bien visible en 9a sur la figure 1.

En d'autres termes, les moyens de pivotement, d'appui et de relevage de la tablette 1 sont avantageusement compatibles avec une disposition réversible de ladite tablette.

Bien entendu, l'invention n'est nullement limitée au mode de réalisation décrit et illustré qui n'a été donné qu'à titre d'exemple.

A cet égard, la réversibilité de la tablette peut parfaitement être réalisée suivant l'invention, que ladite tablette soit relevable à l'aide de la porte du coffre ou non. C'est dire que les cordons permettant de relever la tablette à l''aide de la porte du coffre pourraient être omis sans sortir du cadre de l'invention.

## Revendications

1. Tablette arrière (1) pour véhicule automobile, du type disposée horizontalement entre le siège arrière (2) et la porte (3) du coffre du véhicule (5), caractérisée en ce qu'elle présente la forme d'une cuvette (4) et qu'elle comporte des moyens permettant son montage réversible de telle façon que l'ouverture de la cuvette soit tournée soit vers le haut, soit vers le bas.

2. Tablette selon la revendication, caractérisée en ce qu'elle est munie de moyens de pivotement constitués par deux axes alignés (10) fixés au voisinage du bord avant (11) de la tablette et faisant saillie extérieurement pour coopérer par clippage avec des paliers ou analogues (15) portés par des supports (16) solidaires des flancs arrière (18) de la caisse du véhicule.

3. Tablette selon la revendication 1 ou 2, caractérisée par des moyens d'appui coopérant avec les supports précités et constitués par un bord tombé (8) parcourant la périphérie de la tablette (1) et, lorsque la tablette est inversée, par une partie plane (9) reliant le bord tombé (8) au bord de la cuvette (4).

4. Tablette selon l'une des revendications 1 à 3, et comportant des moyens de relevage constitués par au moins un cordon souple (24) dont les deux extrémités sont respectivement reliées à la tablette (1) et à la porte (3) du coffre, caractérisée en ce qu'elle comporte des moyens de clippage réversibles pour l'une (23) des extrémités du cordon.

5. Tablette selon la revendication 4, caractérisée en ce que les moyens de clippage précités sont constitués par des orifices traversant (22) dans lesquels l'une (23) des extrémités du cordon est clippée.

6. Véhicule automobile équipé d'une tablette selon l'une quelconque des revendications 1 à 5.

## Patentansprüche

1. Gepäckraumabdeckung (1) für ein Kraftfahrzeug der Gattung, die zwischen dem hinteren Sitz (2) und der Tür (3) des Fahrzeuggepäckraums (5) waagrecht angeordnet ist, dadurch gekennzeichnet, daß sie die Gestalt einer Schale (4) aufweist und daß sie ihr umkehrbares Montieren ermöglichende Mittel aufweist, so daß die Öffnung der Schale entweder nach oben oder nach unten gerichtet ist.

2. Abdeckung nach Anspruch 1, dadurch gekennzeichnet, daß sie mit Schwenkmitteln versehen ist, die aus zwei in der Nähe des Vorderrandes (11) der Abdeckung angebrachten und nach außen vorspringenden ausgerichteten Spindeln (10) betehen, um mit von mit den hinteren Seiten (18) des Kastens des Fahrzeugs einstückigen Trägern (16) getragenen Lagern oder dergleichen (15) durch Einrasten zusammenzuarbeiten.

3. Abdeckung nach Anspruch 1 oder 2, gekennzeichnet durch Stützmittel, die mit den besagten Trägern zusammenarbeiten und die aus einem die Abdeckung (1) umgebenden, nach unten gebogenen Rand (8) und, wenn die Abdeckung umgekehrt ist, aus einem den nach unten gebogenen Rand (8) mit dem Rand der Schale (4) verbindenden flachen Teil (9) bestehen.

4. Abdeckung nach einem der Ansprüche 1 bis 3, die aus wenigstens einer biegsamen Schnur (24), deren Ende mit der Abdeckung (1) bw. mit der Tür (3) des Gepäckraums verbunden sind, gebildete Hochhebemittel aufweist, dadurch gekennzeichnet, daß sie umkehrbare Einrastmittel für eines (23) der Enden der Schnur aufweist.

5. Abdeckung nach Anspruch 4, dadurch gekennzeichnet, daß die besagten Einrastmittel aus Durchbohrungen (22) bestehen, in denen eines (23) der Enden der Schnur eingerastet ist.

6. Mit einer Abdeckung nach irgendeinem der Ansprüche 1 bis 5 ausgerüstetes Kraftfahrzeug.

**Claims**

1. A rear shelf (1) for an automotive vehicle, of the kind horizontally arranged between the rear seat (2) and the trunk door (3) of the vehicle (5), characterized in that it exhibits the shape of a cup (4) and in that it comprises means allowing said shelf to be reversibly mounted so that the opening of the cup be directed either upwards, or downwards.

2. A shelf according to claim 1, characterized in that it comprises pivot means consisting of two pins (10) aligned and securend adjacent to the forward edge (11) of the shelf and projecting outwards to cooperate through a snap-like clip action with bearings or the like (15) carried by supports (16) made fast with the rear sides (18) of the vehicle body.

3. A shelf according to claim 1 or 2, characterized in that it comprises bearing means co-operating with said supports and consisting of a turned-down edge (8) extending throughout the periphery of the shelf (1) and, with the shelf in inverted position, of a flat portion (9) connecting the turned-down edge (8) to the edge of the cup (4).

4. A shelf according to one of claims 1 to 3, and comprising lifting means consisting of at least one flexible cord (24) both ends of which are connected to the shelf (1) and to the trunk door (3), respectively, characterized in that it comprises reversible snapping means for one (23) of the ends of the cord.

5. A shelf according to claim 4, characterized in that said snapping means consist of through holes (22) in which one (23) of the ends of the cord is fastened through snap-like clip action.

6. Automotive vehicle equipped with a shelf according to any of claims 1 to 5.

EP 0 223 659 B1

**FIG. 1**

**FIG. 2**